# EUROPEAN PATENT APPLICATION

(11) **EP 4 686 232 A1**
(43) Date of publication of application: **28.01.2026**
(21) Application number: 24784065.5
(22) Date of filing: 19.03.2024
(51) Int. Cl.: H04W 4/06, H04W 76/40, H04L 65/1069, H04L 65/611

(54) **COMMUNICATION METHOD AND APPARATUS**

(30) Priority: 07.04.2023 CN 202310410430
(71) Applicant: Huawei Technologies Co., Ltd., Shenzhen, Guangdong 518129 (CN)
(72) Inventor: WU, Wenbin, Shenzhen, Guangdong 518129 (CN); ZHANG, Haisen, Shenzhen, Guangdong 518129 (CN); WANG, Yan, Shenzhen, Guangdong 518129 (CN); CHEN, Lei, Shenzhen, Guangdong 518129 (CN)
(74) Representative: Goddar, Heinz J.
(86) International application number: PCT/CN2024/082508
(87) International publication number: WO 2024/207980

(57) **Abstract**

A communication method and apparatus are provided. The method includes: A first network device receives a request message, where the request message is used to request to create a first broadcast session for a first PLMN, and the first broadcast session is a session of a first broadcast service. If the first network device determines, based on the request message, that the first broadcast session and a second broadcast session belong to sessions of the first broadcast service, and the second broadcast session is a session created for a second PLMN, the first network device sends first indication information to a second network device, where the first indication information indicates not to set up a first transmission channel for the first broadcast session, and the first transmission channel is a channel for transmitting the first broadcast service. According to the foregoing method, when determining that the first broadcast session and the second broadcast session belong to the sessions of the first broadcast service, the first network device may indicate that the second network device does not need to set up the channel used to transmit the first broadcast service, so that network resources can be saved, and network resource utilization efficiency can be improved.

## Description

### CROSS-REFERENCE TO RELATED APPLICATIONS

This application claims priority to Chinese Patent Application No. 202310410430.X, filed with the China National Intellectual Property Administration on April 7, 2023 and entitled "COMMUNICATION METHOD AND APPARATUS", which is incorporated herein by reference in its entirety.

### TECHNICAL FIELD

Embodiments of this application relate to the wireless communication field, and in particular, to a communication method and apparatus.

### BACKGROUND

To avoid repeated construction of network infrastructure as much as possible, save overall network investment, alleviate huge financial pressure on construction of a 5th generation (5th generation, 5G) mobile communication system, and accelerate commercial use of the 5G mobile communication system, network co-construction sharing intensity may be considered to be enhanced. Radio access network (radio access network, RAN) sharing mainly means that a RAN may be connected to core network nodes of a plurality of operators. A plurality of operators may co-construct a RAN, or one operator may independently construct a RAN and other operators rent the RAN of the operator.

In a RAN sharing scenario, a plurality of public land mobile networks (public land mobile networks, PLMN) may set up sessions for a same broadcast service. Therefore, how to save network resources in a session setup process of a same broadcast service is a problem worthy of attention.

### SUMMARY

This application provides a communication method and apparatus, to save network resources in a scenario in which a plurality of PLMNs set up sessions for a same broadcast service.

According to a first aspect, this application provides a communication method. The method includes: A first network device receives a request message, where the request message is used to request to create a first broadcast session for a first public land mobile network PLMN, and the first broadcast session is a session of a first broadcast service; the first network device determines, based on the request message, that the first broadcast session and a second broadcast session belong to sessions of the first broadcast service, where the second broadcast session is a session created for a second PLMN; and the first network device sends first indication information to a second network device, where the first indication information indicates not to set up a first transmission channel for the first broadcast session, and the first transmission channel is a channel for transmitting the first broadcast service.

In the foregoing design, when the first network device determines, based on the request message, that the first broadcast session and the second broadcast session belong to the sessions of the first broadcast service, the first network device may indicate that the second network device does not need to set up the channel used to transmit the first broadcast service, so that network resources can be saved, and network resource utilization efficiency can be improved.

In a possible design, the request message includes a first temporary multicast group identifier and an identifier of the first broadcast service, and the first temporary multicast group identifier includes an identifier of the first PLMN.

In a possible design, before the first broadcast session is created, there is a second transmission channel set up for the second broadcast session, and the second transmission channel is a channel for transmitting the first broadcast service.

In a possible design, before the first network device sends the first indication information to the second network device, the first network device sends second indication information to a third network device, where the second indication information indicates the third network device not to set up the first transmission channel for the first broadcast session.

In the foregoing design, the third network device may not allocate address information of the first transmission channel, for example, an F1-U TNL CU, to the first broadcast session based on the second indication information, so that network resources can be saved.

In a possible design, the first network device receives the address information of the first transmission channel from the third network device, where the address information of the first transmission channel is null or an invalid value.

In a possible design, the first network device sends third indication information to the third network device, where the third indication information indicates the third network device not to set up a third transmission channel for the first broadcast session, and the third transmission channel is a channel for transmitting the first broadcast service with a first core network device.

In the foregoing design, the third network device may not allocate address information of the third transmission channel, for example, an NG-U GTP DL TEID, to the first broadcast session based on the third indication information, so that network resources can be saved.

In a possible design, in a unicast scenario, the first network device receives the address information of the third transmission channel from the third network device, where the address information of the third transmission channel is null or an invalid value.

In a possible design, in a multicast scenario, the third network device skips joining a multicast group.

In the foregoing design, the third network device may not join the multicast group based on the third indication information, so that an NG-U tunnel between the third network device and the first core network device is not set up.

In a possible design, the first network device sends fourth indication information to the first core network device, where the fourth indication information indicates not to set up the third transmission channel for the first broadcast session, and the third transmission channel is the channel for transmitting the first broadcast service with the first core network device.

In the foregoing design, the first core network device may be indicated not to set up the address information of the first transmission channel, for example, the NG-U tunnel.

In a possible design, the first network device receives the request message from the first core network device.

In a possible design, the first network device is a CU or a CU-CP, and the second network device is a DU.

In a possible design, the first network device sends fifth indication information to the second network device, where the fifth indication information indicates not to set up a third transmission channel for the first broadcast session, and the third transmission channel is a channel for transmitting the first broadcast service with a first core network device.

In the foregoing design, the second network device may indicate the first core network device not to set up an NG-U tunnel.

In a possible design, after the first network device sends the first indication information to the second network device, the second network device sends sixth indication information to a third network device, where the sixth indication information indicates the third network device to release the first transmission channel.

In the foregoing design, the third network device may release, based on the sixth indication information, address information allocated to the first broadcast session, for example, an F1-U TNL CU, so that network resources can be saved.

In a possible design, the first network device receives the request message from the second network device.

In a possible design, the first network device is a DU, and the second network device is a CU-CP or a CU.

In a possible design, the first network device provides services for the first PLMN and the second PLMN.

According to a second aspect, this application provides a communication method. The method includes: A first network device receives a request message, where the request message is used to request to create a first broadcast session for a first PLMN, and the first broadcast session is a session of a first broadcast service; the first network device determines, based on the request message, that the first broadcast session and a second broadcast session belong to sessions of the first broadcast service, where the second broadcast session is a session created for a second PLMN; and the first network device sends indication information 1 to a second network device, where the indication information 1 indicates not to transmit data of the first broadcast service from the first PLMN or not to transmit data of the first broadcast service from the second PLMN.

In the foregoing method, to avoid redundancy caused by sending data of a same first broadcast service on all F1-U tunnels, the indication information 1 indicates not to transmit the data of the first broadcast service from the first PLMN or not to transmit the data of the first broadcast service from the second PLMN. That is, data may choose to be sent on one of the F1-U tunnels, and data is prohibited from being sent on other F1-U tunnels, so that sending of redundant data of the first broadcast service can be avoided.

In a possible design, before the first network device sends the indication information 1 to the second network device, the first network device determines the indication information 1 based on session information of the first broadcast session and session information of the second broadcast session.

In a possible design, the session information of the first broadcast session includes at least one of a quantity of neighbor cells corresponding to the first broadcast session, a quality of service parameter corresponding to the first broadcast session, and a quantity of terminal devices corresponding to the first broadcast session; and the session information of the second broadcast session includes at least one of a quantity of neighbor cells corresponding to the second broadcast session, a quality of service parameter corresponding to the second broadcast session, and a quantity of terminal devices corresponding to the second broadcast session.

In a possible design, when the indication information 1 indicates not to transmit the data of the first broadcast service from the first PLMN, the first network device sends indication information 2 to the second network device, where the indication information 2 indicates to resume transmission of the data of the first broadcast service from the first PLMN; or when the indication information 1 indicates not to transmit the data of the first broadcast service from the second PLMN, the first network device sends indication information 3 to the second network device, where the indication information 3 indicates to resume transmission of the data of the first broadcast service from the second PLMN.

In the foregoing design, when a problem occurs in the broadcast session for transmitting the first broadcast service, a broadcast session of another PLMN may be used in time to transmit data, that is, another F1-U tunnel is selected in time to send the data, so that a data transmission delay can be reduced.

In a possible design, the first network device provides services for the first PLMN and the second PLMN.

In a possible design, the first network device is a CU-CP, and the second network device is a CU-UP; or the first network device is a DU, and the second network device is a CU-CP.

According to a third aspect, this application provides a communication apparatus. The apparatus is a first network device or a chip in the first network device, and the apparatus includes a transceiver unit and a processing unit. The transceiver unit is configured to receive a request message, where the request message is used to request to create a first broadcast session for a first PLMN, and the first broadcast session is a session of a first broadcast service; the processing unit is configured to determine, based on the request message, that the first broadcast session and a second broadcast session belong to sessions of the first broadcast service, where the second broadcast session is a session created for a second PLMN; and the transceiver unit is configured to send first indication information to a second network device, where the first indication information indicates not to set up a first transmission channel for the first broadcast session, and the first transmission channel is a channel for transmitting the first broadcast service.

In a possible design, the request message includes a first temporary multicast group identifier and an identifier of the first broadcast service, and the first temporary multicast group identifier includes an identifier of the first PLMN.

In a possible design, before the first broadcast session is created, there is a second transmission channel set up for the second broadcast session, and the second transmission channel is a channel for transmitting the first broadcast service.

In a possible design, the transceiver unit is configured to: before sending the first indication information to the second network device, send second indication information to a third network device, where the second indication information indicates the third network device not to set up the first transmission channel for the first broadcast session.

In a possible design, the transceiver unit is configured to receive address information of the first transmission channel from the third network device, where the address information of the first transmission channel is null or an invalid value.

In a possible design, the transceiver unit is configured to send third indication information to the third network device, where the third indication information indicates the third network device not to set up a third transmission channel for the first broadcast session, and the third transmission channel is a channel for transmitting the first broadcast service with a first core network device.

In a possible design, the transceiver unit is configured to: in a unicast scenario, receive address information of the third transmission channel from the third network device, where the address information of the third transmission channel is null or an invalid value.

In a possible design, the transceiver unit is configured to send fourth indication information to the first core network device, where the fourth indication information indicates not to set up the third transmission channel for the first broadcast session, and the third transmission channel is the channel for transmitting the first broadcast service with the first core network device.

In a possible design, the transceiver unit is configured to: when receiving the request message, receive the request message from the first core network device.

In a possible design, the first network device is a CU or a CU-CP, and the second network device is a DU.

In a possible design, the transceiver unit is configured to send fifth indication information to the second network device, where the fifth indication information indicates not to set up a third transmission channel for the first broadcast session, and the third transmission channel is a channel for transmitting the first broadcast service with a first core network device.

In a possible design, the transceiver unit is configured to: when receiving the request message, receive the request message from the second network device.

In a possible design, the first network device is a DU, and the second network device is a CU-CP or a CU.

In a possible design, the first network device provides services for the first PLMN and the second PLMN.

For technical effect of the third aspect, refer to corresponding technical effect of the first aspect.

According to a fourth aspect, this application further provides an apparatus. The apparatus may perform the foregoing method design. The apparatus may be a chip or a circuit that can perform the function corresponding to the foregoing method, or a device including the chip or the circuit.

In a possible implementation, the apparatus includes: a memory, configured to store computer-executable program code; and a processor, where the processor is coupled to the memory. The program code stored in the memory includes instructions. When the processor executes the instructions, the apparatus or a device on which the apparatus is installed is enabled to perform the method in any one of the foregoing possible designs.

The apparatus may further include a communication interface. The communication interface may be a transceiver. Alternatively, if the apparatus is a chip or a circuit, the communication interface may be an input/output interface of the chip, for example, an input/output pin.

In a possible design, the apparatus includes corresponding functional units, respectively configured to implement the steps in the foregoing method. The function may be implemented by hardware, or may be implemented by executing corresponding software by hardware. The hardware or the software includes one or more units that correspond to the foregoing function.

According to a fifth aspect, this application provides a computer-readable storage medium. The computer-readable storage medium stores a computer program. When the computer program runs on an apparatus, the method in any one of the foregoing possible designs is performed.

According to a sixth aspect, this application provides a computer program product. The computer program product includes a computer program. When the computer program runs on an apparatus, the method in any one of the foregoing possible designs is performed.

### BRIEF DESCRIPTION OF DRAWINGS

FIG. 1 is a diagram of a data transmission process of an MBS service according to this application;
FIG. 2 is a diagram of an interface relationship in a CU-DU architecture according to this application;
FIG. 3A is a diagram of a network architecture of an MOCN according to this application;
FIG. 3B is a diagram of a network architecture of an MORAN according to this application;
FIG. 4A is a diagram of a network architecture in which a CU and a DU are shared according to this application;
FIG. 4B is a diagram of a network architecture in which only a DU is shared according to this application;
FIG. 5 is a diagram of a broadcast session setup procedure according to this application;
FIG. 6 is an overview flowchart of a communication method according to this application;
FIG. 7 is a diagram of a broadcast session setup procedure initiated by a 5GC of a PLMN 2 according to this application;
FIG. 8 is a diagram of another broadcast session setup procedure initiated by a 5GC of a PLMN 2 according to this application;
FIG. 9 is a diagram of still another broadcast session setup procedure initiated by a 5GC of a PLMN 2 according to this application;
FIG. 10 is an overview flowchart of another communication method according to this application;
FIG. 11 is a diagram of a structure of a communication apparatus according to this application; and
FIG. 12 is a diagram of a result of another communication apparatus according to this application.

### DESCRIPTION OF EMBODIMENTS

In embodiments of this application, "at least one" means one or more, and "a plurality of" means two or more than two. The term "and/or" describes an association relationship between associated objects, and indicates that three relationships may exist. For example, A and/or B may indicate the following cases: Only A exists, both A and B exist, and only B exists, where A and B may be singular or plural. The character "/" usually indicates an "or" relationship between the associated objects. "At least one of the following pieces (items)" or a similar expression thereof indicates any combination of these items, including a single item (piece) or any combination of a plurality of items (pieces). For example, at least one item (piece) of a, b, or c may represent a, b, c, a and b, a and c, b and c, or a, b and c, where each of a, b, c may be an element, or may be a set including one or more elements.

In this application, "example", "in some embodiments", "in some other embodiments", or the like is used to represent giving an example, an illustration, or a description. Any embodiment or design solution described as an "example" in this application should not be explained as being more preferred or having more advantages than another embodiment or design solution. Exactly, the term "example" is for presenting a concept in a specific manner.

"Of (of)", "corresponding (corresponding, relevant)", and "corresponding (corresponding)" in this application may be interchangeably used sometimes. It should be noted that expressed meanings are the same when differences are not emphasized. In embodiments of this application, communication and transmission may be interchangeably used sometimes. It should be noted that expressed meanings are the same when differences are not emphasized. For example, transmission may include sending and/or receiving, and may be a noun or a verb.

It should be noted that in embodiments of this application, words such as "first" and "second" are merely used for purpose of distinguishing descriptions, and cannot be understood as an indication or implication of relative importance or an indication or implication of a sequence.

For ease of understanding embodiments of this application, several basic concepts in embodiments of this application are briefly described.

### 1. Multicast and broadcast service (multicast and broadcast service, MBS)

The MBS is a service, for example, a live streaming service, a public security service, and a batch software update service, oriented to a plurality of terminal devices.

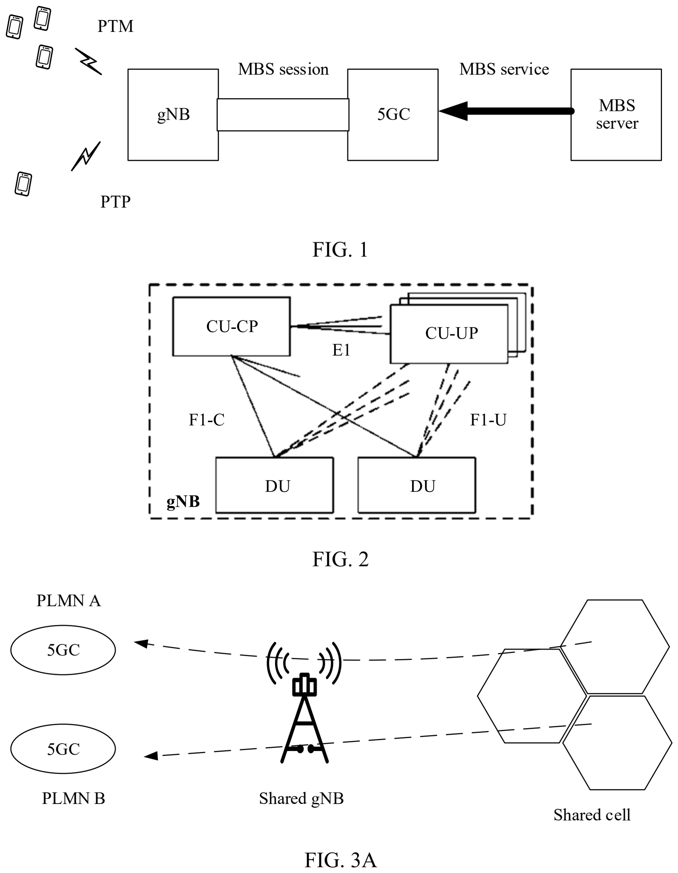

Data of the MBS service is from a data server. FIG. 1 shows a data transmission process of the MBS service. First, the data server sends the data of the MBS service to a core network device, then the core network device sends the data of the MBS service to a base station, and finally the base station sends the data of the MBS service to at least one terminal device that receives the data of the MBS service.

When the core network device sends the data of the MBS service to the base station, the data of the MBS service is transmitted through a transmission channel corresponding to an MBS session, and each MBS session may include at least one MBS quality of service (quality of service, QoS) flow.

When the base station sends the data of the MBS service to the terminal device, the data packet is transmitted through an MBS radio bearer. For one MBS radio bearer, there are two transmission manners: a point-to-multipoint (point-to-multipoint, PTM) transmission manner, and a point-to-point (point-to-point, PTP) transmission manner.

### 2. Multicast service

The multicast service is designed for a service with a high QoS requirement, and can provide a same QoS level as a unicast service. For the multicast service, the core network device also needs to manage joining and leaving of the terminal device in a multicast group. For transmission between the core network device and the base station depends on a protocol data unit session (protocol data unit session, PDU session), a new MBS QoS flow is introduced.

The base station supports sending of data to the terminal device in the PTP transmission manner and the PTM transmission manner, and supports control of dynamic switching between the PTP transmission manner and the PTM transmission manner. The multicast service can be provided only for a terminal device in a radio resource control (radio resource control, RRC) connected state, and the base station and the core network device need to maintain information about the terminal device corresponding to the multicast group. In addition, for the multicast service, deactivation or activation, of the MBS session, triggered by the core network device is also supported, and the terminal device does not sense of a state of the MBS service.

### 3. CU-DU architecture

A CU is a central unit (central unit), and a DU is a distributed unit (distributed unit). The CU-DU architecture may also be referred to as a CU-DU separated base station architecture, and is a base station architecture newly introduced in 5G. In a 4th generation (4th generation, 4G) mobile communication system architecture, base stations are independently deployed and separately connected to a 4G core network. In a 5G architecture, DU parts of different base stations are independently deployed, but CU parts of different base stations are centrally deployed.

From a perspective of a physical module structure, a 4G base station is internally divided into several modules: a baseband processing unit (building base band unit, BBU), a remote radio unit (remote radio unit, RRU), and an antenna. Each base station has a set of BBUs, and is directly connected to the core network through the BBU. In a 5G CU-DU architecture, an original RRU and an original antenna are combined into an active antenna unit (active antenna unit, AAU), and the BBU is divided into a DU and a CU. Each base station has a set of DUs, and a plurality of stations share a same CU for centralized management.

From a perspective of a protocol stack structure, in the 5G CU-DU architecture, a physical bottom layer of a BBU of an original 4G base station is transferred to an AAU for processing, a physical upper layer, a medium access control (medium access control, MAC) layer, and a radio link control (radio link control, RLC) layer that have a high real-time requirement are placed in the DU for processing, and a packet data convergence protocol (packet data convergence protocol, PDCP) layer, a service data adaptation protocol (service data adaptation protocol, SDAP) layer, an RRC layer, and the like that have a low real-time requirement are placed in the CU for processing.

In the CU-DU architecture, an interface between the CU and the DU is referred to as an F1 interface. The CU may be further separated, and is divided into a CU-CP and a CU-UP. The CU-CP is a central unit-control plane (central unit-control plane), and the CU-UP is a central unit-user plane (central unit-user plane).

An interface between the CU-CP and the CU-UP is referred to as an E1 interface. Usually, one base station has only one CU-CP, a plurality of CU-UPs, and a DU. One DU can be connected to only one CU-CP, and one CU-UP can also be connected to only one CU-CP. An interface between the CU-CP and the DU is referred to as an F1-C (control plane), and an interface between the CU-UP and the DU is referred to as an F1-U (user plane). It may be learned that there may be a plurality of F1-Us between one DU and a plurality of CU-UPs. The F1-U is usually used for data transmission, and may also be referred to as an F1-U tunnel, as shown in FIG. 2.

### 4. RAN sharing

The following describes the RAN sharing from perspectives of resource sharing intensity, service independence, and the like.

A multi-operator core network (multi-operator core network, MOCN) may also be referred to as co-carrier frequency sharing. In this sharing manner, a core network is independent. Configuration management, alarm management, performance indicators, and the like all need to be managed by a primary operator. A part of performance indicators may distinguish PLMNs for monitoring, and features cannot be activated independently. A BBU, an RRU, or an AUU is shared, and a specific carrier segment or specific carrier segments of different operators is/are shared, to form a shared carrier with a continuous large bandwidth, so that infrastructure and device costs can be reduced, as shown in FIG. 3A.

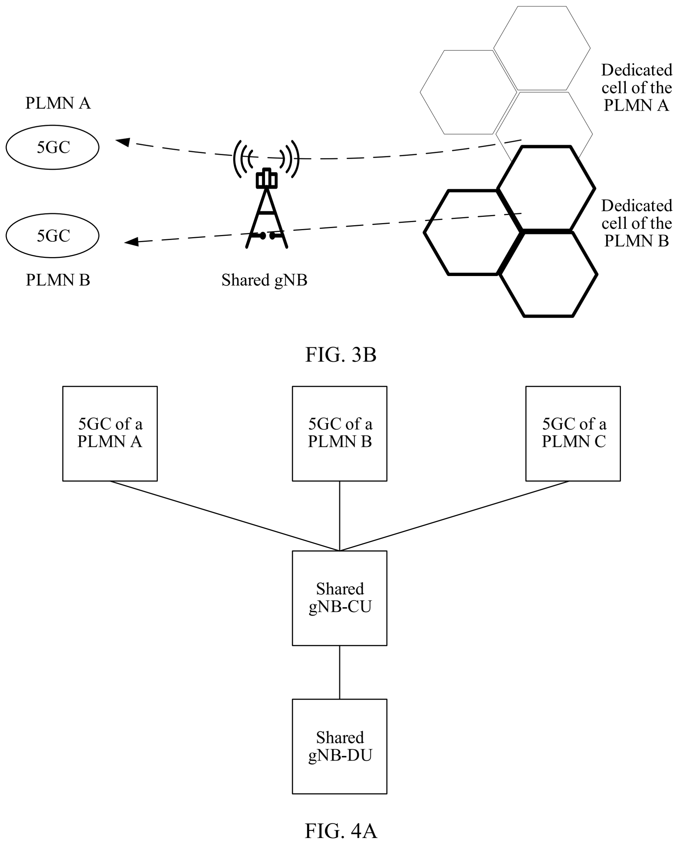

A multi-operator radio access network (multi-operator radio access network, MORAN) may also be referred to as carrier frequency splitting sharing. In this sharing manner, the core network is independent, a 5G RAN device is shared, and a cell and a spectrum are independent. Configuration management, alarm management, and the like all need to be managed by a primary operator. Performance indicators may be distinguished for monitoring, and cell-level features may be planned and activated independently. The BBU is shared and connected to RRUs/AAUs of a same vendor. Operators of RRUs/AAUs are independent of each other, carriers are independently configured and managed, and different logically independent cells are provided for a plurality of operators inside the base station for independent use, as shown in FIG. 3B.

It should be further understood that in this application, RAN sharing and a base station contribution may be mutually replaced.

Embodiments of this application are mainly applied to an MOCN scenario, and may also be applied to another scenario. This is not limited in this application. The following describes only several possible RAN sharing architectures in the MOCN scenario.

A RAN sharing architecture 1 is an architecture in which a CU and a DU are shared.

Core networks of PLMNs are independently configured, and CUs and DUs of the PLMN are shared.

As shown in FIG. 4A, a 5G core network (5G core, 5GC) of a PLMN A, a 5GC of a PLMN B, and a 5GC of a PLMN C are independently set. A gNB-CU of the PLMN A, a gNB-CU of the PLMN B, and a gNB-CU of the PLMN C are shared, that is, the gNB-CUs are shared; and a gNB-DU of the PLMN A, a gNB-DU of the PLMN B, and a gNB-DU of the PLMN C are shared, that is, the gNB-DUs are shared.

For example, the 5GC of the PLMN A sends a temporary multicast group identifier (temporary multicast group identifier, TMGI) A and an identifier of a broadcast service to the shared gNB-CU, where the TMGI A includes an identifier of the PLMN A. Similarly, the 5GC of the PLMN B sends a TMGI B and an identifier of a broadcast service to the shared gNB-CU, where the TMGI B includes an identifier of the PLMN B. The shared gNB-CUs determine, based on the received identifiers of the two broadcast services, that the broadcast services requested by the two 5GCs are a same service. Alternatively, the shared gNB-CUs send the identifiers of the two broadcast services to the shared gNB-DU, and the shared gNB-DUs determine that the broadcast services requested by the two 5GCs are a same service.

A RAN sharing architecture 2 is an architecture in which only a DU is shared.

Core networks of PLMNs are independently configured, and CUs of the PLMNs are not shared, but DUs of the PLMN are shared.

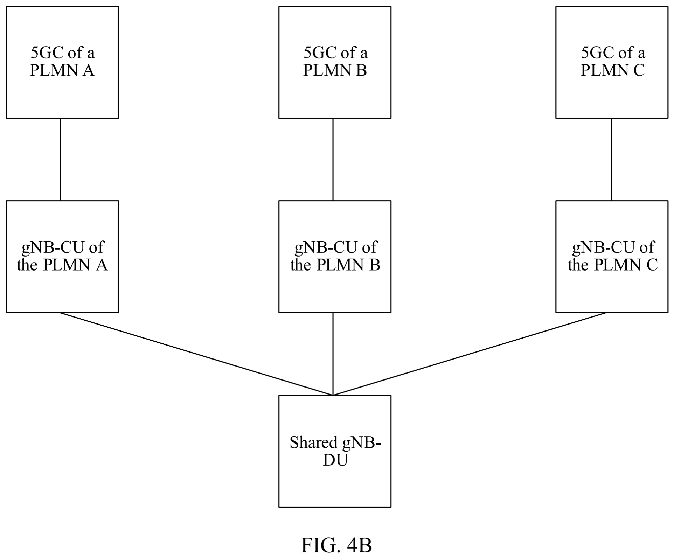

As shown in FIG. 4B, a 5GC of a PLMN A, a 5GC of a PLMN B, and a 5GC of a PLMN C are independently set. A gNB-CU of the PLMN A, a gNB-CU of the PLMN B, and a gNB-CU of the PLMN C are not shared; and a gNB-DU of the PLMN A, a gNB-DU of the PLMN B, and a gNB-DU of the PLMN C are shared, that is, the gNB-DUs are shared.

Because the gNB-CUs of the PLMNs are not shared, the gNB-CUs of the PLMNs receive TMGIs and identifiers of broadcast services that are sent by the 5GCs of the corresponding PLMNs, and then send the TMGIs and the identifiers of the broadcast services to the shared gNB-DUs. The shared gNB-DUs determine that broadcast services requested by different 5GCs are a same service.

It should be further understood that in this application, each network element is described by using only a name of the network element in a 5G network as an example. In another future network, another naming manner may be used. This is not limited in this application.

### 4. NG interface

The NG interface is an interface between an evolved NodeB (evolved NodeB, gNB) and a 5GC in a 5G system (5G system, 5GS). The NG interface is divided into an NG-C interface (a control plane interface between the gNB and the 5GC) and an NG-U interface (a user plane interface between the gNB and the 5GC).

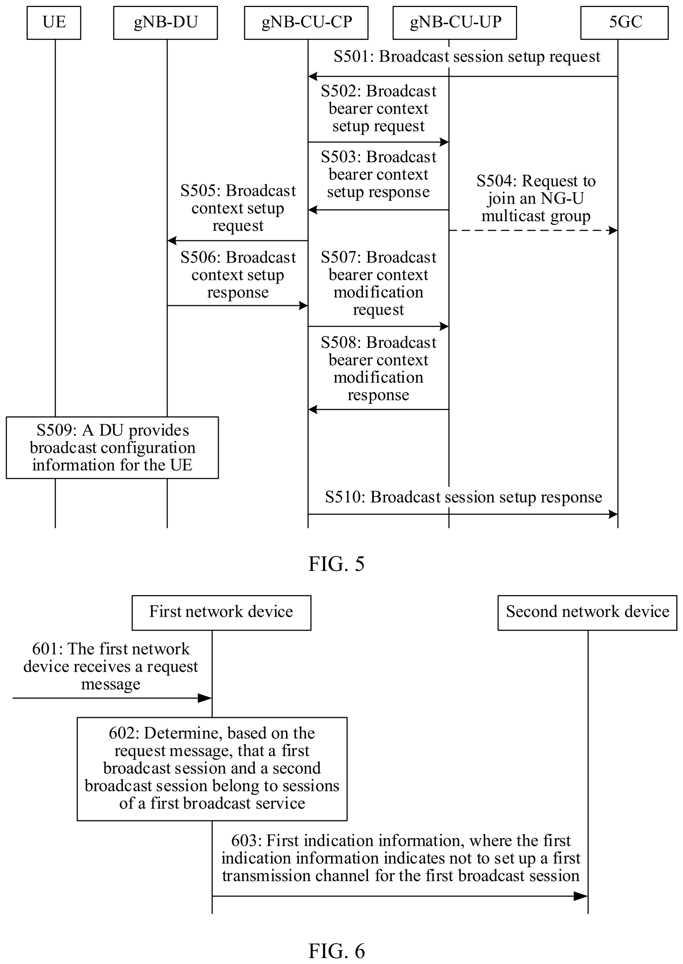

FIG. 5 is a diagram of a current broadcast session setup procedure.

S501: A 5GC sends a broadcast session setup request (NGAP Broadcast Session Setup Request) message to a gNB-CU-CP, where the message includes a TMGI. In addition, the message may further include at least one of slice information, a 5G QoS file, area information, and transport layer information.

For example, in an NG-U multicast transmission scenario, the transport layer information includes an IP multicast address and a source specific IP multicast address (which may also be denoted as 5G core network NG-U transport layer address information (5G core NG-U transport network layer, 5GC NG-U TNL)). NG-U multicast may also be referred to as N3mb multicast, to be specific, a common GTP-U tunnel is used for each MBS session; and the NG-U multicast is multicast for short in this application.

In an NG-U unicast transmission scenario, the transport layer information includes a general packet radio service tunneling protocol uplink tunnel endpoint identifier (GPRS tunneling protocol uplink tunnel endpoint identifier, GTP UP TEID) (which may also be denoted as a 5GC NG-U TNL). NG-U unicast may also be referred to as N3mb unicast, to be specific, a separate GTP-U tunnel is used for each MBS session; and the NG-U unicast is unicast for short in this application.

The gNB-CU-CP may choose to transmit data by using the NG-U multicast or transmit data by using the NG-U unicast.

S502: The gNB-CU-CP sends a broadcast bearer context setup request (E1AP BC Bearer Context Setup Request) message to a gNB-CU-UP.

The message includes the transport layer information from the 5GC. A specific type of transport layer information to be carried depends on whether the gNB-CU-CP selects the NG-U multicast or the NG-U unicast.

S503: The gNB-CU-UP sends a broadcast bearer context setup response (E1AP BC Bearer Context Setup Response) message to the gNB-CU-CP.

In the NG-U multicast transmission scenario, the message includes F1-U transport layer address information of a CU (F1-U TNL CU). The F1-U TNL CU includes an F1-U GTP UL TEID.

In the NG-U unicast transmission scenario, the message includes an NG-U GTP DL TEID (which may also be denoted as a gNB NG-U TNL) and an F1-U TNL CU, and the F1-U TNL CU includes an F1-U GTP UL TEID.

S504: In the NG-U multicast transmission scenario, the gNB-CU-UP joins an NG-U multicast group.

In the NG-U multicast transmission scenario, the gNB-CU-CP sets up an NG-U tunnel with the 5GC.

S505: The gNB-CU-CP sends a broadcast context setup request (F1AP Broadcast Context Setup Request) message to a DU.

The message includes MRB configuration information, another related session parameter, and the like. In addition, optionally, the message may further include an F1-U GTP UL TEID.

S506: The DU sends a broadcast context setup response (F1AP Broadcast Context Setup Response) message to the gNB-CU-CP.

The message includes an F1-U GTP DL TEID (which may also be denoted as an F1-U TNL DU).

S507: The gNB-CU-CP sends a broadcast bearer context modification request (F1AP BC Bearer Context Modification Request) to the gNB-CU-UP.

Optionally, the message includes an F1-U GTP DL TEID.

S508: The gNB-CU-UP sends a broadcast bearer context modification response (F1AP BC Bearer Context Modification Response) to the gNB-CU-CP.

S509: The DU provides broadcast configuration information for UE.

For example, the DU configures a broadcast resource, and provides the broadcast configuration information for the UE through a multicast control channel (MBS control channel, MCCH).

S510: The gNB-CU-CP sends a broadcast session setup response (NGAP Broadcast Session Setup Response) message to the 5GC.

In the NG-U unicast transmission scenario, the message includes an NG-U GTP DL TEID, and the NG-U GTP DL TEID is from S503. In this case, in the NG-U unicast transmission scenario, the gNB-CU-CP sets up an NG-U tunnel with the 5GC.

It may be learned from the foregoing process that a data transmission channel, also referred to as the NG-U tunnel, may be set up through interaction between the 5GC and a gNB.

An F1-U tunnel may be set up through interaction between a gNB-CU and a gNB-DU. In addition, the F1-U tunnel is set up between the gNB-CU and the gNB-DU provided that the broadcast session setup procedure is started. That is, NG-U tunnel setup and F1-U tunnel setup are independent of each other.

During current discussion, when a plurality of PLMNs share a base station, if the plurality of PLMNs create broadcast sessions for a same broadcast service, to save resources, the base station may determine a quantity of NG-U tunnels to be set up. Although the base station can determine the quantity of NG-U tunnels whether to be set up, it may be learned from the foregoing analysis that an F1-U tunnel is definitely set up each time the broadcast session setup procedure is initiated.

For example, in a RAN sharing scenario, there are five PLMNs in total. For a same broadcast service, if the base station determines to set up all five NG-U tunnels, five F1-U tunnels are definitely set up between the gNB-CU and the gNB-DU. If the base station determines to set up only one NG-U tunnel, broadcast sessions of remaining four PLMNs still need to be set up, but the NG-U tunnel is not set up. However, the five F1-U tunnels are still set up in this process. Therefore, even if there is only one NG-U tunnel, there are still five F1-U tunnels.

To save network resources in a scenario in which a plurality of PLMNs set up sessions for a same broadcast service, this application provides a communication method. The method includes the following steps.

As shown in FIG. 6, the method includes the following steps.

601: A first network device receives a request message, where the request message is used to request to create a first broadcast session for a first PLMN, and the first broadcast session is a session of a first broadcast service.

For example, the request message includes a first temporary multicast group identifier and an identifier of the first broadcast service, and the first temporary multicast group identifier includes an identifier of the first PLMN.

602: The first network device determines, based on the request message, that the first broadcast session and a second broadcast session belong to sessions of the first broadcast service, where the second broadcast session is a session created for a second PLMN.

The second broadcast session has been set up before the first broadcast session, and the second broadcast session is a broadcast session that has been set up.

The first network device provides services for the first PLMN and the second PLMN. In addition, the first network device may also provide a service for another PLMN. This is not limited in this application.

For example, the first network device may determine whether a broadcast service corresponding to the first broadcast session is the same as a broadcast service corresponding to the second broadcast session; and if the broadcast service corresponding to the first broadcast session is the same as the broadcast service corresponding to the second broadcast session, determine that the first broadcast session and the second broadcast session belong to sessions of a same broadcast service; otherwise, determine that the first broadcast session and the second broadcast session belong to sessions of different broadcast services.

That the first network device determines, based on the request message, that the first broadcast session and the second broadcast session belong to the sessions of the first broadcast service may also be described as that the first network device determines, based on the request message, that the session of the first broadcast service already exists, or that the session of the first broadcast service has been set up for another PLMN.

603: The first network device sends first indication information to a second network device, where the first indication information indicates not to set up a first transmission channel for the first broadcast session, and the first transmission channel is a channel for transmitting the first broadcast service.

In a possible design, the first transmission channel is an F1-U tunnel or an NG-U tunnel.

For example, before the first broadcast session is created, there is a second transmission channel set up for the second broadcast session, and the second transmission channel is a channel for transmitting the first broadcast service. A type of the second transmission channel is the same as that of the first transmission channel. For example, the second transmission channel is also an F1-U tunnel, and the second transmission channel is also used to transmit the first broadcast service.

In the foregoing design, when the first network device determines, based on the request message, that the first broadcast session and the second broadcast session belong to the sessions of the first broadcast service, the first network device may indicate that the second network device does not need to set up the channel used to transmit the first broadcast service, so that network resources can be saved, and network resource utilization efficiency can be improved.

The following further describes several RAN sharing scenarios.

Scenario 1: The first network device is a CU, and the second network device is a DU.

For example, for 601, the first network device may receive the request message from a first core network device.

In addition, in a possible design, in a unicast scenario, the first network device may further send fourth indication information to the first core network device, where the fourth indication information indicates not to set up a third transmission channel for the first broadcast session, and the third transmission channel is a channel for transmitting the first broadcast service with the first core network device. The third transmission channel may be an NG-U tunnel. In the foregoing design, the first core network device may be indicated not to set up the third transmission channel, for example, the NG-U tunnel.

For details, refer to related descriptions in Embodiment 1 below.

Scenario 2: The first network device is a CU-CP, the second network device is a DU, and a third network device is a CU-UP.

In addition to the foregoing descriptions for the scenario 1, in a possible design, the first network device further sends second indication information to the third network device, where the second indication information indicates the third network device not to set up the first transmission channel for the first broadcast session. Further, the first network device may receive address information of the first transmission channel from the third network device, where the address information of the first transmission channel is null or an invalid value. In the foregoing design, the third network device may not allocate the address information of the first transmission channel, for example, an F1-U TNL CU, to the first broadcast session based on the second indication information, so that network resources can be saved.

In another possible design, the first network device may further send third indication information to the third network device, where the third indication information indicates the third network device not to set up a third transmission channel for the first broadcast session, and the third transmission channel is a channel for transmitting the first broadcast service with a first core network device. The third transmission channel may be an NG-U tunnel.

Further, in a unicast scenario, the first network device may receive address information of the third transmission channel from the third network device, where the address information of the third transmission channel is null or an invalid value. In the foregoing design, the third network device may not allocate the address information of the third transmission channel, for example, an NG-U GTP DL TEID, to the first broadcast session based on the third indication information, so that network resources can be saved.

In a multicast scenario, the third network device does not join a multicast group. In the foregoing design, the third network device may not join the multicast group based on the third indication information, so that an NG-U tunnel between the third network device and the first core network device is not set up.

For details, refer to related descriptions in Embodiment 2 below.

Scenario 3: The first network device is a DU, and the second network device is a CU-CP or a CU.

For example, for 601, the second network device may receive a broadcast session setup request message from a first core network device. The second network device sends the request message to the first network device based on the broadcast session request message.

In a possible design, in a unicast scenario, the first network device sends fifth indication information to the second network device, where the fifth indication information indicates not to set up a third transmission channel for the first broadcast session, and the third transmission channel is a channel for transmitting the first broadcast service with the first core network device. The third transmission channel may be an NG-U tunnel. The second network device may further send fourth indication information to the first core network device, where the fourth indication information indicates not to set up the third transmission channel for the first broadcast session, and the third transmission channel is the channel for transmitting the first broadcast service with the first core network device. In the foregoing design, the first core network device may be indicated not to set up the third transmission channel, for example, the NG-U tunnel.

For details, refer to Embodiment 3 below.

Scenario 4: The first network device is a DU, and the second network device is a CU-CP.

In addition to the foregoing descriptions for the scenario 3, after the first network device sends the first indication information to the second network device, the second network device sends sixth indication information to a third network device, where the sixth indication information indicates the third network device to release the first transmission channel. In the foregoing design, the third network device may release, based on the sixth indication information, an address that is of the first transmission channel and that is allocated to the first broadcast session, for example, an F1-U TNL CU, so that network resources can be saved.

For details, refer to Embodiment 3 below.

### Embodiment 1:

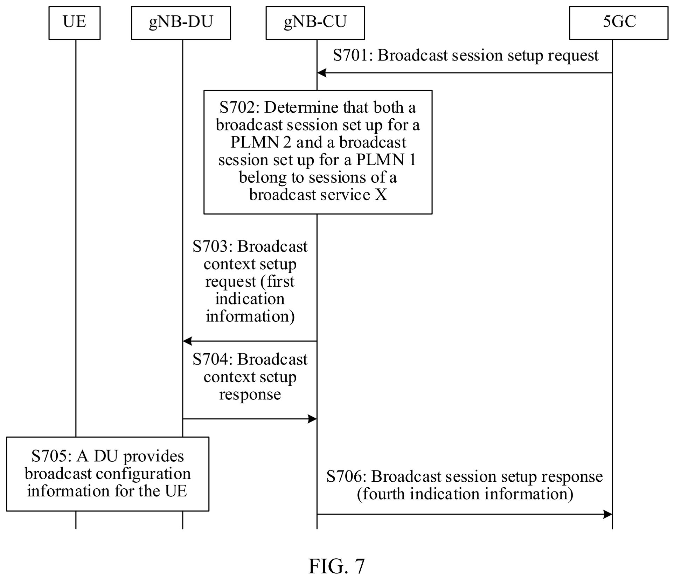

As shown in FIG. 7, in a scenario shown in Embodiment 1 below, a gNB is divided into a gNB-CU and a gNB-DU. A PLMN 1 and a PLMN 2 share the gNB-CU and the gNB-DU. A 5GC of the PLMN 1 has initiated a broadcast session setup procedure for the PLMN 1, and a broadcast session set up for the PLMN 1 is a session for a broadcast service x. Then, a 5GC of the PLMN 2 also initiates a broadcast session setup procedure, and a broadcast session set up for the PLMN 2 is a session for the broadcast service x. The 5GC of the PLMN 1 and the 5GC of the PLMN 2 are independent of each other. That the 5GC of the PLMN 1 initiates the broadcast session setup procedure before the 5GC of the PLMN 2 is merely an example, and is not intended to limit this application.

The broadcast session setup procedure initiated by the 5GC of the PLMN 2 may specifically include the following steps.

S701: The 5GC sends a broadcast session setup request message to the gNB-CU, where the message includes a TMGI 2 and an identifier of the broadcast service X, and the TMGI 2 includes an identifier of the PLMN 2.

S702: The gNB-CU determines that both the broadcast session set up for the PLMN 2 and the broadcast session set up for the PLMN 1 belong to sessions of the broadcast service X.

S703: The gNB-CU sends a broadcast context setup request to the gNB-DU.

The message includes first indication information, and the first indication information indicates not to set up an F1-U tunnel for the broadcast session of the PLMN 2.

Specifically, the message includes F1-U tunnel address information (BC Bearer Context F1-U TNL Info at CU) of the gNB-CU, and the information is optional information. When the gNB-CU determines to send the first indication information, the gNB-CU may ignore the information, that is, the broadcast context setup request does not include the information.

S704: The gNB-DU sends a broadcast context setup response to the gNB-CU.

For example, the message includes F1-U tunnel address information (BC Bearer Context F1-U TNL Info at DU) of the gNB-DU, the information is mandatory information, and the information may carry a null value or an invalid value.

S705: The DU provides broadcast configuration information for UE.

S706: The gNB-CU sends a broadcast session setup response message to the 5GC.

For example, in a unicast scenario, the message may include fourth indication information, and the fourth indication information indicates not to set up an NG-U tunnel for the broadcast session of the PLMN 2. The fourth indication information is optional information.

### Embodiment 2:

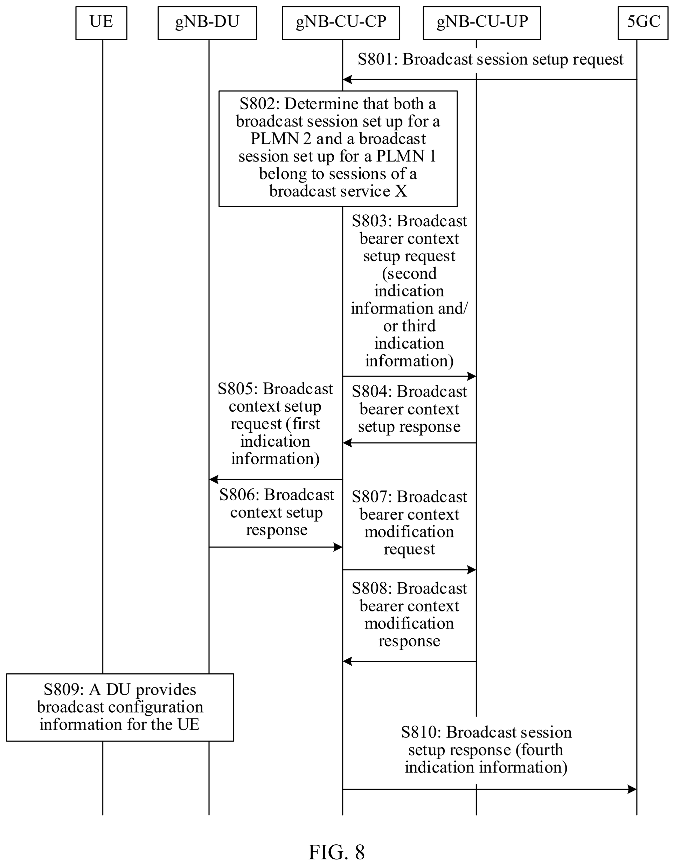

As shown in FIG. 8, in a scenario shown in Embodiment 1, a gNB is divided into a gNB-CU and a gNB-DU, and the gNB-CU is divided into a gNB-CU-CP and a gNB-CU-UP. A PLMN 1 and a PLMN 2 share the gNB-CU-CP, the gNB-CU-UP, and the gNB-DU. A 5GC of the PLMN 1 has initiated a broadcast session setup procedure for the PLMN 1, and a broadcast session set up for the PLMN 1 is a session for a broadcast service x. Then, a 5GC of the PLMN 2 also initiates a broadcast session setup procedure, and a broadcast session set up for the PLMN 2 is a session for the broadcast service x. The 5GC of the PLMN 1 and the 5GC of the PLMN 2 are independent of each other. That the 5GC of the PLMN 1 initiates the broadcast session setup procedure before the 5GC of the PLMN 2 is merely an example, and is not intended to limit this application.

The broadcast session setup procedure initiated by the 5GC of the PLMN 2 may specifically include the following steps.

S801: The 5GC sends a broadcast session setup request message to the gNB-CU-CP, where the message includes a TMGI 2 and an identifier of the broadcast service X, and the TMGI 2 includes an identifier of the PLMN 2.

S802: The gNB-CU-CP determines that both the broadcast session set up for the PLMN 2 and the broadcast session set up for the PLMN 1 belong to sessions of the broadcast service X.

S803: The gNB-CU-CP sends a broadcast bearer context setup request message to the gNB-CU-UP.

The message includes second indication information and/or third indication information, the second indication information indicates the gNB-CU-UP not to set up an F1-U tunnel for the broadcast session of the PLMN 2, and the third indication information indicates the gNB-CU-UP not to set up an NG-U tunnel for the broadcast session of the PLMN 2. The second indication information and the third indication information are optional information.

S804: The gNB-CU-UP sends a broadcast bearer context setup response to the gNB-CU-CP.

The gNB-CU-UP may not allocate an F1-U TNL CU to the broadcast session of the PLMN 2 based on the second indication information. Therefore, the message carries F1-U tunnel address information including the gNB-CU, the information is mandatory information, and the information may carry a null value or an invalid value.

In addition, in a unicast scenario, the gNB-CU-UP may not allocate an NG-U GTP DL TEID to the broadcast session of the PLMN 2 based on the third indication information. Therefore, the message carries NG-U tunnel address information, and the NG-U tunnel address information is null or an invalid value. In a multicast scenario, the gNB-CU-UP does not join a multicast group.

S805: The gNB-CU-CP sends a broadcast context setup request to the gNB-DU.

The message includes first indication information, and the first indication information indicates not to set up an F1-U tunnel for the broadcast session of the PLMN 2.

Specifically, the message includes F1-U tunnel address information of the gNB-CU, and the information is optional information. When the gNB-CU-CP determines to send the first indication information, the gNB-CU-CP may ignore the information, that is, the broadcast context setup request does not include the information.

S806: The gNB-DU sends a broadcast context setup response to the gNB-CU-CP.

For example, the message includes F1-U tunnel address information of the gNB-DU, the information is mandatory information, and the information may carry a null value or an invalid value.

S807: The gNB-CU-CP sends a broadcast bearer context modification request to the gNB-CU-UP.

S808: The gNB-CU-UP sends a broadcast bearer context modification response to the gNB-CU-CP.

S809: The DU provides broadcast configuration information for UE.

S810: The gNB-CU-CP sends a broadcast session setup response message to the 5GC.

For example, in a unicast scenario, the message may include fourth indication information, and the fourth indication information indicates not to set up an NG-U tunnel for the broadcast session of the PLMN 2. The fourth indication information is optional information.

### Embodiment 3:

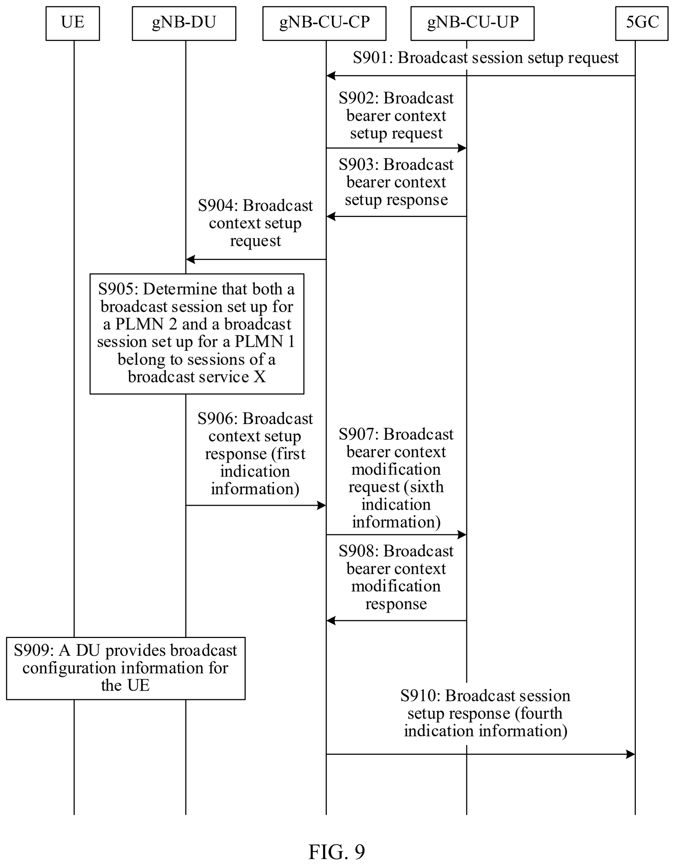

As shown in FIG. 9, in a scenario shown in Embodiment 1, a gNB is divided into a gNB-CU and a gNB-DU, and the gNB-CU is divided into a gNB-CU-CP and a gNB-CU-UP. A PLMN 1 and a PLMN 2 share the gNB-DU, or the PLMN 1 and the PLMN 2 share the gNB-CU-CP, the gNB-CU-UP, and the gNB-DU. However, the gNB-DU determines whether broadcast services are the same. To be specific, the gNB-DU determines that both a broadcast session set up for the PLMN 2 and a broadcast session set up for the PLMN 1 belong to sessions of a same broadcast service. A 5GC of the PLMN 1 has initiated a broadcast session setup procedure for the PLMN 1, and the broadcast session set up for the PLMN 1 is a service session for a broadcast service x. Then, a 5GC of the PLMN 2 also initiates a broadcast session setup procedure, and the broadcast session set up for the PLMN 2 is a session for the broadcast service x. The 5GC of the PLMN 1 and the 5GC of the PLMN 2 are independent of each other. That the 5GC of the PLMN 1 initiates the broadcast session setup procedure before the 5GC of the PLMN 2 is merely an example, and is not intended to limit this application.

The broadcast session setup procedure initiated by the 5GC of the PLMN 2 may specifically include the following steps.

S901: The 5GC sends a broadcast session setup request message to the gNB-CU-CP, where the message includes a TMGI 2 and an identifier of the broadcast service X, and the TMGI 2 includes an identifier of the PLMN 2.

S902: The gNB-CU-CP sends a broadcast bearer context setup request message to the gNB-CU-UP.

S903: The gNB-CU-UP sends a broadcast bearer context setup response to the gNB-CU-CP.

S904: The gNB-CU-CP sends a broadcast context setup request to the gNB-DU.

The message includes a TMGI 2 and a service identifier X.

S905: The gNB-DU determines that both the broadcast session set up for the PLMN 2 and the broadcast session set up for the PLMN 1 belong to sessions of the broadcast service X.

S906: The gNB-DU sends a broadcast context setup response to the gNB-CU-CP.

For example, the message includes first indication information, and the first indication information indicates not to set up an F1-U tunnel for the broadcast session of the PLMN 2.

In addition, the message includes F1-U tunnel address information of the gNB-DU, the information is mandatory information, and the information may carry a null value or an invalid value.

Optionally, the message may include fifth indication information, and the fifth indication information indicates not to set up an NG-U tunnel for the broadcast session of the PLMN 2.

S907: The gNB-CU-CP sends a broadcast bearer context modification request to the gNB-CU-UP.

Optionally, the message includes sixth indication information, and the sixth indication information indicates the gNB-CU-UP to release the F1-U tunnel.

S908: The gNB-CU-UP sends a broadcast bearer context modification response to the gNB-CU-CP.

For example, the gNB-CU-UP may release the F1-U tunnel based on the sixth indication information.

S909: The DU provides broadcast configuration information for UE.

S910: The gNB-CU-CP sends a broadcast session setup response message to the 5GC.

For example, the message may include fourth indication information, and the fourth indication information indicates not to set up an NG-U tunnel for the broadcast session of the PLMN 2. The fourth indication information is optional information.

To save network resources in a scenario in which a plurality of PLMNs set up sessions for a same broadcast service, this application provides a communication method. The method includes the following steps.

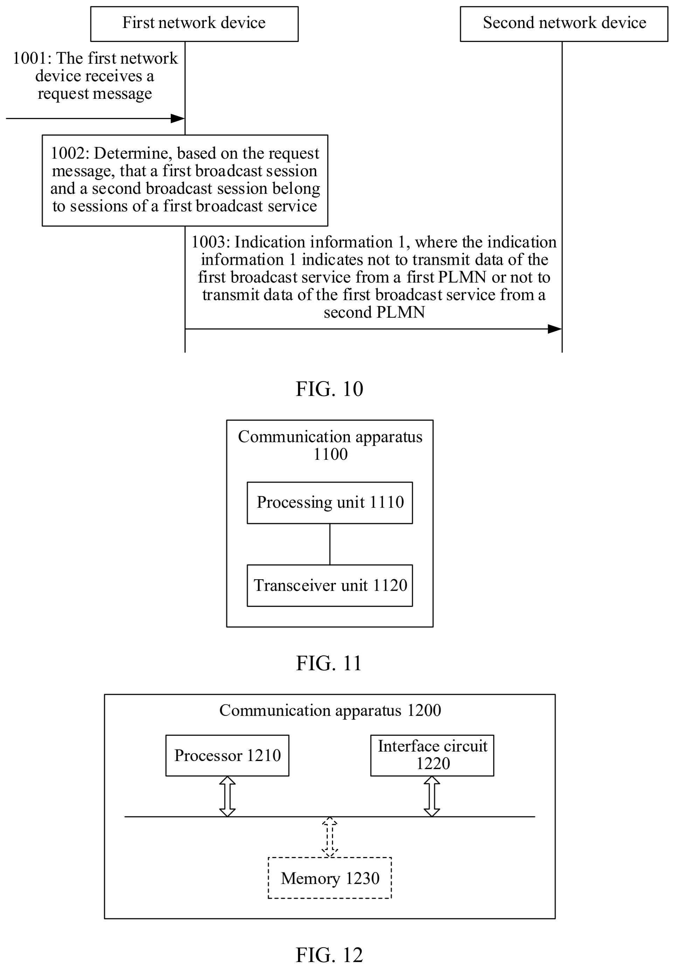

As shown in FIG. 10, the method includes the following steps.

1001: A first network device receives a request message, where the request message is used to request to create a first broadcast session for a first PLMN, and the first broadcast session is a session of a first broadcast service.

The first network device is a CU-CP, and a second network device is a CU-UP; or the first network device is a DU, and a second network device is a CU-CP.

1002: The first network device determines, based on the request message, that the first broadcast session and a second broadcast session belong to sessions of the first broadcast service, where the second broadcast session is a session created for a second PLMN.

The first network device provides services for the first PLMN and the second PLMN. For 1001 and 1002, refer to 601 and 602. Details are not described herein again.

1003: The first network device sends indication information 1 to the second network device, where the indication information 1 indicates not to transmit data of the first broadcast service from the first PLMN or not to transmit data of the first broadcast service from the second PLMN.

Before the first network device sends the indication information 1 to the second network device, the first network device determines the indication information 1 based on session information of the first broadcast session and session information of the second broadcast session.

The session information of the first broadcast session includes at least one of a quantity of neighbor cells corresponding to the first broadcast session, a quality of service parameter corresponding to the first broadcast session, and a quantity of terminal devices corresponding to the first broadcast session; and the session information of the second broadcast session includes at least one of a quantity of neighbor cells corresponding to the second broadcast session, a quality of service parameter corresponding to the second broadcast session, and a quantity of terminal devices corresponding to the second broadcast session.

A broadcast session with a larger quantity of neighbor cells, a better quality of service parameter, and/or a larger quantity of terminal devices is selected to transmit the data of the first broadcast service, and another broadcast session is not used to transmit the data of the first broadcast service.

It should be noted that in the embodiment shown in FIG. 10, the first broadcast session is created for the first PLMN, the second broadcast session is created for the second PLMN, and an F1-U tunnel corresponding to the first broadcast session and an F1-U tunnel corresponding to the second broadcast session exist. To avoid redundancy caused by sending data of a same first broadcast service on all F1-U tunnels, the indication information 1 indicates not to transmit the data of the first broadcast service from the first PLMN or not to transmit the data of the first broadcast service from the second PLMN. That is, data may choose to be sent on one of the F1-U tunnels, and data is prohibited from being sent on other F1-U tunnels, so that sending of redundant data of the first broadcast service can be avoided.

In addition, in a possible design, when the indication information 1 indicates not to transmit the data of the first broadcast service from the first PLMN, the first network device sends indication information 2 to the second network device, where the indication information 2 indicates to resume transmission of the data of the first broadcast service from the first PLMN; or when the indication information 1 indicates not to transmit the data of the first broadcast service from the second PLMN, the first network device sends indication information 3 to the second network device, where the indication information 3 indicates to resume transmission of the data of the first broadcast service from the second PLMN.

In the foregoing design, when a problem occurs in the broadcast session for transmitting the first broadcast service, a broadcast session of another PLMN may be used in time to transmit data, so that a data transmission delay is reduced.

An MBS neighbor cell list (mbs-NeighbourCellList) indicates a neighbor cell list of an ongoing broadcast session provided by an MRB in a current cell, a list of neighbor cells that may provide a broadcast session, a list of neighbor cells that previously provide a broadcast session, or the like. For example, an MBS neighbor cell list of a broadcast session 1 provided by cell1 is (cellA, cellB, cellC, cellD). The MBS neighbor cell list is determined when an F1 interface is set up or updated. Therefore, in a scenario in which a CU and a DU are shared (refer to the foregoing architecture in which the CU and the DU are shared), an MBS neighbor cell list of the CU is the same as an MBS neighbor cell list of the DU.

The MBS neighbor cell list is usually used together with an mtch neighbor cell (mtch-NeighbourCell). The mtch neighbor cell indicates a neighbor cell that provides a broadcast service on a multicast traffic channel (multicast traffic channel, MTCH). If the broadcast service is provided on an MTCH of a 1^{st} cell in the MBS neighbor cell list, a 1^{st} bit in mtch neighbor cell indication information is set to 1; otherwise, the 1^{st} bit is set to 0. All or some cells in the MBS neighbor cell list are mtch neighbor cells.

In a scenario in which only the DU is shared, CUs of operators send MBS neighbor cell lists and mtch neighbor cell indication information of the CUs to the shared DU, and the mtch neighbor cell indication information indicates a list of neighbor cells that currently provide a broadcast service. The MBS neighbor cell lists and the mtch neighbor cell indication information received by the shared DU may be different.

Therefore, the shared DU needs to perform processing with reference to the MBS neighbor cell lists and the mtch neighbor cell indication information of the broadcast sessions.

The following solution is applicable to a scenario in which only a DU is shared, the shared DU provides services for a first PLMN and a second PLMN, and the first PLMN and the second PLMN separately set up broadcast sessions for a same broadcast service. A maximum value of a quantity of cells that may be included in the MBS neighbor cell list is a preset value. For example, the maximum value of the quantity of cells that may be included in the MBS neighbor cell list is 8. This is not limited in this application.

In a possible implementation 1, when all cells of the first PLMN and the second PLMN in the shared DU are shared cells, even if orders of MBS neighbor cell lists planned for +PLMNs are different, names may also be different. Because all these cells are shared cells, the shared DU may use an MBS neighbor cell list of the first PLMN or an MBS neighbor cell list of the second PLMN, and does not need to regenerate an MBS neighbor cell list.

In addition, the shared DU may also determine to use an mtch neighbor cell of the first PLMN or an mtch neighbor cell of the second PLMN.

In a possible implementation 2, when some cells of the first PLMN and the second PLMN in the shared DU are shared cells, the shared gNB-DU broadcasts that an MBS neighbor cell list needs to be regenerated. A specific generation method is not limited in this application.

The following provides descriptions with reference to specific examples.

Assuming that in the current shared DU, an operator A has set up a broadcast session 1, the shared DU receives a broadcast context setup request sent by a CU-B of an operator B, where the broadcast context setup request is used to request to set up a broadcast session 2, and the broadcast context setup request may include mtch neighbor cell indication information.

Specifically, there may be the following cases based on whether each operator has a non-shared cell:
(1) All cells of the operator A and the operator B in the shared DU are shared cells, and this corresponds to the possible implementation 1.

An area of a broadcast session is determined by an application function (application function, AF). Therefore, if all the cells of the operator A and the operator B in the shared DU are shared cells, when the shared DU receives the broadcast context setup request sent by the CU-B, if a broadcast service corresponding to the broadcast session is the same as a broadcast service corresponding to the broadcast session of the operator A, and shared cells are also the same, the shared DU may determine to use an MBS neighbor cell list of the operator A, or an MBS neighbor cell list of the operator B.

Further, the shared DU may also determine to use an mtch neighbor cell of the operator A or an mtch neighbor cell of the operator B. For example, when all the shared cells broadcast data of the broadcast service, or when a cell indicated by mtch neighbor cell indication information of the operator A is the same as a cell indicated by mtch neighbor cell indication information of the operator B, the shared DU may also determine to use the mtch neighbor cell of the operator A or the mtch neighbor cell of the operator B. In addition, the shared DU may also determine, according to another policy, whether to use the mtch neighbor cell of the operator A or the mtch neighbor cell of the operator B. This is not limited in this application.

(2) The operator A and the operator B have a non-shared cell in the shared DU, and this corresponds to the possible implementation 2.

For example, a neighbor cell list (MBS neighbor cell list) sent by a CU-A to the shared gNB-DU is (cell1, cell2, cell3), and mtch neighbor cell indication information may be represented as (1, 1, 1). A neighbor cell list (MBS neighbor cell list) sent by a CU-B to the shared gNB-DU is (cell2, cell3, cell4), and mtch neighbor cell indication information may be represented as (1, 1, 1). The two pieces of mtch neighbor cell indication information herein are merely examples.

Although neighbor cell content of the two operators is the same, cell1 of the operator A and cell4 of the operator B are non-shared cells. Because the shared DU can broadcast only one MBS neighbor cell list, if the MBS neighbor cell list sent by the CU-A is used, a broadcast service of the CU-A may be correctly indicated, but a broadcast service of the CU-B may be incorrectly indicated because the broadcast service of the CU-B does not exist in cell1. Therefore, the gNB-DU needs to regenerate a new MBS neighbor cell list. For example, the new MBS neighbor cell list is (cell1, cell2, cell4).

An advantage of the foregoing method is that although a broadcast service of cell3 is not indicated, it is ensured that no error is indicated in the existing MBS neighbor cell list. For the MBS neighbor cell list that is not changed, an indication error may occur in the existing neighbor cell list.

It should be further understood that the MBS neighbor cell list mainly includes a cell name or a physical cell identifier, and cell1, cell2, cell3, and cell4 have same understanding for the operator A and the operator B.

In a possible design, the gNB-DU may determine whether a cell name (or a physical cell identifier) of each cell in the new MBS neighbor cell list has a same cell name (or a same physical cell identifier) in the MBS neighbor cell list of the operator A. If the cell name (or the physical cell identifier) of each cell in the new MBS neighbor cell list has a same cell name (or a same physical cell identifier) in the MBS neighbor cell list of the operator A, an index corresponding to the cell in the mtch neighbor cell indication information of the operator A is 1; otherwise, an index corresponding to the cell in the mtch neighbor cell indication information of the operator A is 0. For example, when the new MBS neighbor cell list is (celll, cell2, cell4), cell1 and cell2 also exist in the MBS neighbor cell list (cell1, cell2, cell3) of the operator A. In this case, an index corresponding to cell1 in the mtch neighbor cell indication information of the operator A is set to 1, and an index corresponding to cell2 is set to 1. If the MBS neighbor cell list (cell1, cell2, and cell3) of the operator A does not include cell4, an index of cell4 in the mtch neighbor cell indication information of the operator A is set to 0. Therefore, the mtch neighbor cell indication information of the operator A may be represented as (1, 1, 0), and similarly the mtch neighbor cell indication information of the operator B may be represented as (0, 1, 1).

In another possible design, the gNB-DU may not perform the foregoing determining process, and directly set an index corresponding to cell1 in the mtch neighbor cell indication information to 1. In this case, the mtch neighbor cell indication information of the operator A may be represented as (1, 1, 1), and similarly the mtch neighbor cell indication information of the operator B may be represented as (1, 1, 1).

Further, for the operator A, the DU may send a TMGI 1, the new MBS neighbor cell list, and the mtch neighbor cell indication information of the operator A to the UE by using the broadcast session 1, where the TMGI 1 includes a PLMN ID of the operator A. The mtch neighbor cell indication information of operator A indicates a cell that is actually broadcast in the new MBS neighbor cell list of the operator A.

For the operator B, the DU may send a TMGI 2, the new MBS neighbor cell list, and the mtch neighbor cell indication information of the operator B to the UE by using the broadcast session 2, where the TMGI 2 includes a PLMN ID of the operator B. The mtch neighbor cell indication information of the operator B indicates a cell that is actually broadcast in the new MBS neighbor cell list of the operator B.

It should be noted that the newly generated MBS neighbor cell list and the mtch neighbor cell indication information of the CU-A and the CU-B are merely examples, and are not intended to limit this application. The shared DU may further determine, according to another policy, the new MBS neighbor cell list and mtch neighbor cell indication information separately corresponding to different CUs. This is not limited in this application.

It may be understood that, to implement functions in the foregoing embodiments, the devices include corresponding hardware structures and/or software modules for performing the functions. A person skilled in the art should be easily aware that, in combination with the units and method steps in the examples described in embodiments disclosed in this application, this application can be implemented in a form of hardware or a combination of hardware and computer software in this application. Whether a function is performed by hardware or hardware driven by computer software depends on particular application scenarios and design constraint conditions of the technical solutions.

FIG. 11 and FIG. 12 are diagrams of possible structures of communication apparatuses according to embodiments of this application. These communication apparatuses may be configured to implement the function of the terminal or the base station in the foregoing method embodiments. Therefore, beneficial effect of the foregoing method embodiments can also be implemented. In embodiments of this application, the communication apparatus may be the first network device shown in FIG. 1, or may be a module (for example, a chip) used in the first network device.

As shown in FIG. 11, the communication apparatus 1100 includes a processing unit 1110 and a transceiver unit 1120. The communication apparatus 1100 is configured to implement the function of the terminal or the base station in the method embodiment shown in FIG. 6.

When the communication apparatus 1100 is configured to implement the function of the first network device in the method embodiment shown in FIG. 6.

The transceiver unit 1120 is configured to receive a request message, where the request message is used to request to create a first broadcast session for a first public land mobile network PLMN, and the first broadcast session is a session of a first broadcast service; the processing unit 1110 is configured to determine, based on the request message, that the first broadcast session and a second broadcast session belong to sessions of the first broadcast service, where the second broadcast session is a session created for a second PLMN; and the transceiver unit 1120 is configured to send first indication information to a second network device, where the first indication information indicates not to set up a first transmission channel for the first broadcast session, and the first transmission channel is a channel for transmitting the first broadcast service.

In a possible design, the request message includes a first temporary multicast group identifier and an identifier of the first broadcast service, and the first temporary multicast group identifier includes an identifier of the first PLMN.

In a possible design, before the first broadcast session is created, there is a second transmission channel set up for the second broadcast session, and the second transmission channel is a channel for transmitting the first broadcast service.

In a possible design, the transceiver unit 1120 is configured to: before sending the first indication information to the second network device, send second indication information to a third network device, where the second indication information indicates the third network device not to set up the first transmission channel for the first broadcast session.

In a possible design, the transceiver unit 1120 is configured to receive address information of the first transmission channel from the third network device, where the address information of the first transmission channel is null or an invalid value.

In a possible design, the transceiver unit 1120 is configured to send third indication information to the third network device, where the third indication information indicates the third network device not to set up a third transmission channel for the first broadcast session, and the third transmission channel is a channel for transmitting the first broadcast service with a first core network device.

In a possible design, the transceiver unit 1120 is configured to: in a unicast scenario, receive address information of the third transmission channel from the third network device, where the address information of the third transmission channel is null or an invalid value.

In a possible design, the transceiver unit 1120 is configured to send fourth indication information to the first core network device, where the fourth indication information indicates not to set up the third transmission channel for the first broadcast session, and the third transmission channel is the channel for transmitting the first broadcast service with the first core network device.

In a possible design, the transceiver unit 1120 is configured to receive the request message from the first core network device.

In a possible design, the transceiver unit 1120 is configured to send fifth indication information to the second network device, where the fifth indication information indicates not to set up a third transmission channel for the first broadcast session, and the third transmission channel is a channel for transmitting the first broadcast service with a first core network device.

In a possible design, the transceiver unit 1120 is configured to receive the request message from the second network device.

For more detailed descriptions of the processing unit 1110 and the transceiver unit 1120, refer to related descriptions in the method embodiment shown in FIG. 6.

As shown in FIG. 12, the communication apparatus 1200 includes a processor 1210 and an interface circuit 1220. The processor 1210 and the interface circuit 1220 are coupled to each other. It may be understood that the interface circuit 1220 may be a transceiver or an input/output interface. Optionally, the communication apparatus 1200 may further include a memory 1230, configured to: store instructions executed by the processor 1210, or store input data required by the processor 1210 to run the instructions, or store data generated after the processor 1210 runs the instructions.

When the communication apparatus 1200 is configured to implement the method shown in FIG. 12, the processor 1210 is configured to implement a function of the processing unit 1110, and the interface circuit 1220 is configured to implement a function of the transceiver unit 1120.

It may be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor, or may be any conventional processor or the like.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in a base station or a terminal. Alternatively, the processor and the storage medium may exist in the base station or the terminal as discrete components.

All or some of the foregoing embodiments may be implemented by software, hardware, firmware, or any combination thereof. When the software is used to implement embodiments, all or some of embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or there is a logic conflict, terms and/or descriptions in different embodiments are consistent and may be mutually referenced, and technical features in different embodiments may be combined based on an internal logic relationship thereof, to form a new embodiment.

It may be understood that various numbers in embodiments of this application are merely used for distinguishing for ease of description, and are not used to limit the scope of embodiments of this application. Sequence numbers of the foregoing processes do not mean an execution sequence, and the execution sequence of the processes should be determined based on functions and internal logic of the processes

## Claims

1. A communication method, wherein the method comprises:
receiving, by a first network device, a request message, wherein the request message is used to request to create a first broadcast session for a first public land mobile network PLMN, and the first broadcast session is a session of a first broadcast service;
determining, by the first network device based on the request message, that the first broadcast session and a second broadcast session belong to sessions of the first broadcast service, wherein the second broadcast session is a session created for a second PLMN; and
sending, by the first network device, first indication information to a second network device, wherein the first indication information indicates not to set up a first transmission channel for the first broadcast session, and the first transmission channel is a channel for transmitting the first broadcast service.

2. The method according to claim 1, wherein the request message comprises a first temporary multicast group identifier and an identifier of the first broadcast service, and the first temporary multicast group identifier comprises an identifier of the first PLMN.

3. The method according to claim 1 or 2, wherein before the first broadcast session is created, there is a second transmission channel set up for the second broadcast session, and the second transmission channel is a channel for transmitting the first broadcast service.

4. The method according to any one of claims 1 to 3, before sending, by the first network device, the first indication information to the second network device, the method further comprises:
sending, by the first network device, second indication information to a third network device, wherein the second indication information indicates the third network device not to set up the first transmission channel for the first broadcast session.

5. The method according to claim 4, further comprising:
receiving, by the first network device, address information of the first transmission channel from the third network device, wherein the address information of the first transmission channel is null or an invalid value.

6. The method according to any one of claims 1 to 5, further comprising:
sending, by the first network device, third indication information to the third network device, wherein the third indication information indicates the third network device not to set up a third transmission channel for the first broadcast session, and the third transmission channel is a channel for transmitting the first broadcast service with a first core network device.

7. The method according to claim 6, further comprising:
in a unicast scenario, receiving, by the first network device, address information of the third transmission channel from the third network device, wherein the address information of the third transmission channel is null or an invalid value.

8. The method according to claim 6, further comprising: in a multicast scenario, skipping, by the third network device, joining a multicast group.

9. The method according to any one of claims 1 to 7, further comprising:
sending, by the first network device, fourth indication information to the first core network device, wherein the fourth indication information indicates not to set up the third transmission channel for the first broadcast session, and the third transmission channel is the channel for transmitting the first broadcast service with the first core network device.

10. The method according to any one of claims 1 to 9, wherein receiving, by the first network device, the request message comprises:
receiving, by the first network device, the request message from the first core network device.

11. The method according to any one of claims 1 to 10, wherein the first network device is a central unit CU or a central unit-control plane CU-CP, and the second network device is a distributed unit DU.

12. The method according to any one of claims 1 to 3, further comprising:
sending, by the first network device, fifth indication information to the second network device, wherein the fifth indication information indicates not to set up a third transmission channel for the first broadcast session, and the third transmission channel is a channel for transmitting the first broadcast service with a first core network device.

13. The method according to any one of claims 1 to 3 and 12, wherein after sending, by the first network device, the first indication information to the second network device, the method further comprises:
sending, by the second network device, sixth indication information to a third network device, wherein the sixth indication information indicates the third network device to release the first transmission channel.

14. The method according to any one of claims 1 to 3, 12, and 13, wherein receiving, by the first network device, the request message comprises:
receiving, by the first network device, the request message from the second network device.

15. The method according to any one of claims 1 to 3, 10, 11, and 12, wherein the first network device is a DU, and the second network device is a CU-CP or a CU.

16. The method according to any one of claims 1 to 15, wherein the first network device provides services for the first PLMN and the second PLMN.

17. A communication apparatus, wherein the apparatus is a first network device or a chip in the first network device, and the apparatus comprises a transceiver unit and a processing unit, wherein
the transceiver unit is configured to receive a request message, wherein the request message is used to request to create a first broadcast session for a first public land mobile network PLMN, and the first broadcast session is a session of a first broadcast service;
the processing unit is configured to determine, based on the request message, that the first broadcast session and a second broadcast session belong to sessions of the first broadcast service, wherein the second broadcast session is a session created for a second PLMN; and
the transceiver unit is configured to send first indication information to a second network device, wherein the first indication information indicates not to set up a first transmission channel for the first broadcast session, and the first transmission channel is a channel for transmitting the first broadcast service.

18. The apparatus according to claim 17, wherein the request message comprises a first temporary multicast group identifier and an identifier of the first broadcast service, and the first temporary multicast group identifier comprises an identifier of the first PLMN.

19. The apparatus according to claim 17 or 18, wherein before the first broadcast session is created, there is a second transmission channel set up for the second broadcast session, and the second transmission channel is a channel for transmitting the first broadcast service.

20. The apparatus according to any one of claims 17 to 19, wherein the transceiver unit is configured to: before sending the first indication information to the second network device, send second indication information to a third network device, wherein the second indication information indicates the third network device not to set up the first transmission channel for the first broadcast session.

21. The apparatus according to claim 20, wherein the transceiver unit is configured to receive address information of the first transmission channel from the third network device, wherein the address information of the first transmission channel is null or an invalid value.

22. The apparatus according to any one of claims 17 to 21, wherein the transceiver unit is configured to send third indication information to the third network device, wherein the third indication information indicates the third network device not to set up a third transmission channel for the first broadcast session, and the third transmission channel is a channel for transmitting the first broadcast service with a first core network device.

23. The apparatus according to claim 22, wherein the transceiver unit is configured to: in a unicast scenario, receive address information of the third transmission channel from the third network device, wherein the address information of the third transmission channel is null or an invalid value.

24. The apparatus according to any one of claims 17 to 23, wherein the transceiver unit is configured to send fourth indication information to the first core network device, wherein the fourth indication information indicates not to set up the third transmission channel for the first broadcast session, and the third transmission channel is the channel for transmitting the first broadcast service with the first core network device.

25. The apparatus according to any one of claims 17 to 24, wherein the transceiver unit is configured to: when receiving the request message, receive the request message from the first core network device.

26. The apparatus according to any one of claims 17 to 19, wherein the transceiver unit is configured to send fifth indication information to the second network device, wherein the fifth indication information indicates not to set up a third transmission channel for the first broadcast session, and the third transmission channel is a channel for transmitting the first broadcast service with a first core network device.

27. The apparatus according to any one of claims 17 to 19 and 26, wherein the transceiver unit is configured to:
when receiving the request message, receive the request message from the second network device.

28. A chip, wherein the chip is coupled to a memory, and the chip reads a computer program stored in the memory to perform the method according to any one of claims 1 to 16.

29. A computer-readable storage medium, wherein the storage medium stores a computer program or instructions; and when the computer program or the instructions are executed by a communication apparatus, the method according to any one of claims 1 to 16 is implemented.

30. A communication apparatus, comprising a processor and an interface circuit, wherein the interface circuit is configured to: receive a signal from another communication apparatus and transmit the signal to the processor, or send a signal from the processor to another communication apparatus, and the processor is configured to implement the method according to any one of claims 1 to 16 through a logic circuit or by executing code instructions.
